# EUROPÄISCHE PATENTSCHRIFT

(11) **EP 1 675 342 B1**
(45) Veröffentlichungstag und Bekanntmachung des Hinweises auf die Patenterteilung: **08.11.2006**
(21) Anmeldenummer: 04293124.6
(22) Anmeldetag: 23.12.2004
(51) Int. Cl.: H04L 29/06, H04L 29/14, H04L 12/26

(54) **Vorrichtung und Verfahren zur sicheren Fehlerbehandlung in geschützten Kommunikationsnetzen**
Apparatus and method for a secure fault management within protected communication networks
Dispositif et mèthode pour la gestion des erreurs dans des réseaux de communication protégés

(43) Veröffentlichungstag der Anmeldung: 28.06.2006
(73) Patentinhaber: ALCATEL, 75008 Paris (FR)
(72) Erfinder: Gröger, Martin, D-70435 Stuttgart (DE); Föhrenck, Markus, D-71636 Ludwigsburg (DE); Scholz, Christian, D-71701 Schwieberdinge (DE)
(74) Vertreter: Urlichs, Stefan

(56) Entgegenhaltungen:
- WO-A-03/034237
- US-A1- 2002 138 627

## Beschreibung

Die vorliegende Erfindung betrifft eine Vorrichtung und ein Verfahren zur Verbindung eines Datennetzes einer niedrigeren Sicherheitsstufe mit einem Datennetz einer höheren Sicherheitsstufe insbesondere für hoch sicherheitsrelevante Anwendungen wie die Bahntechnik.

Bei sicherheitsrelevanten Anwendungen müssen Datennetze gegen Eindringen von außen wie z.B. Hackerangriffe gesichert werden. Auf der anderen Seite besteht aber oft gerade die Notwendigkeit, Datennetze mit niedrigerer Sicherheitsstufe mit Datennetzen einer höheren Sicherheitsstufe zu verbinden. Dies geschieht üblicherweise durch Zwischenschaltung eines sogenannten Firewalls, d.h. einer Einrichtung, die dazu dient, nicht zugelassene Operationen von außen zu unterbinden. WO 03/034237 beschreibt z.B. ein fehlertolerantes Firewall-System in dem die Verfügbarkeit der Firewalls regelmäßig geprüft wird.

Eine besonderes sicherheitsrelevante Anwendung besteht in der Bahntechnik. Dort werden Netzbereiche einer besonderen Sicherheitskategorie als Integritätsbereiche (IB) bezeichnet. Obwohl der Begriff "Integritätsbereich" aus dem Anwendungsbereich von Leit- und Bediensystemen für elektronische Stellwerke stammt, wird er in diesem Dokument gleichwohl in einem allgemeineren Sinn verwendet.

Im Rahmen eines Leit- und Bediensystems für elektronische Stellwerke gibt es drei Integritätsstufen: Der IB1 ist der operative, also sicherheitsrelevante Bereich, in dem ein Stellwerk durch Fahrdienstleiter bedient wird (sogenannte Unterzentrale oder Steuerzentrale). Der IB2 ist der dispositive, nicht sicherheitsrelevante Bereich, in dem Disponenten den gesamten Bereich der Betriebszentrale überblicken, aber das Stellwerk nicht bedienen, sondern allenfalls (elektronische) Anweisungen an den Fahrdienstleiter oder die Zuglenkung geben. Der IB3 schließlich ist ein Netzbereich des Bahnbetreibers, der eine geringere Sicherheitsstufe als der IB2 besitzt und zur firmeninternen Kommunikation des Bahnbetreibers dient.

Die Architektur des Leit- und Bediensystems sieht die Anbindung von Systemen im IB1 mit Systemen im IB3 vor. Am Übergangspunkt ist eine Einrichtung erforderlich, die das Eindringen von Informationen, die signaltechnische Systeme des IB1 in ihrer Funktion und Integrität verletzen könnten, wirksam verhindert. Diese Einrichtung wird im folgenden als Security-Translator bezeichnet. Obwohl der IB3 kein völlig unkontrollierter Bereich ist, muss davon ausgegangen werden, dass er keine Garantie gegen unberechtigten Zugriff oder gegen Verfälschung von Telegrammen bietet. Der Security-Translator muss daher jeden unzulässigen Zugriff von IB3 nach IB1 verhindern.

Dabei ist es wichtig, dass bei Ausfall oder Fehlfunktionen des Security-Translators keine Sicherheitslücke entsteht. Deshalb muss er bei technischen Fehlfunktionen in einen sicheren Ausfallzustand übergehen, in dem keine Zugriffe mehr von IB3 auf IB1 möglich sind.

Es ist daher eine Aufgabe der Erfindung, eine Vorrichtung und ein Verfahren zur Verbindung eines Datennetzes einer niedrigeren Sicherheitsstufe mit einem Datennetz einer höheren Sicherheitsstufe anzugeben, welche zuverlässig unzulässige Zugriffe aus dem Datennetzes mit niedrigerer Sicherheitsstufe auf das Datennetzes mit höherer Sicherheitsstufe unterbindet und im Fehlerfall in einen sicheren Ausfallzustand übergeht.

Diese und andere Aufgaben werden gelöst durch eine Vorrichtung mit den Merkmalen des Anspruchs 1 und ein Verfahren mit den Merkmalen des Anspruchs 8.

Der Security-Translator überprüft in bestimmten Abständen seine eigene Integrität, um Fehlfunktionen festzustellen und gegebenenfalls einen Übergang in den sicheren Ausfallzustand einzuleiten. Erfindungsgemäß besteht der sichere Ausfallzustand darin, dass die Verbindung von dem Datennetzes mit niedrigerer Sicherheitsstufe zu dem Datennetzes mit höherer Sicherheitsstufe unterbrochen wird. Dies wird durch eine Watchdog-Schaltung erreicht, die die Verbindung zwischen dem Datennetzes mit niedrigerer Sicherheitsstufe und dem Datennetzes mit höherer Sicherheitsstufe geschlossen hält, solange sie regelmäßige Lebenszeichen erhält und die die Verbindung automatisch unterbricht, wenn sie über eine vorbestimmte Zeitspanne kein Lebenszeichen erhält.

Der Security-Translator besitzt einen Telegramm-Filter zur Filterung von Telegrammen aus dem Datennetzes mit niedrigerer Sicherheitsstufe gemäß vorgegebener Filterregeln. Außerdem besitzt der Security-Translator eine erste Prüfkomponente und eine zweite Prüfkomponente. Die erste Prüfkomponente erzeugt Prüftelegramme und sendet sie über den Telegramm-Filter an die zweite Prüfkomponente. Die zweite Prüfkomponente erzeugt nach Erhalt eines gemäß den Filterregeln zugelassenen Prüftelegramms ein Lebenszeichen für die Watchdog-Schaltung und unterbindet nach Erhalt eines gemäß den Filterregeln nicht zugelassenen Prüftelegramms die Erzeugung eines Lebenszeichens für die Watchdog-Schaltung für mindestens die vorbestimmte Zeitspanne.

Damit können positive und negative Eigenschaften der Filtereinrichtung des Security-Translators innerhalb einer definierten Ausfalloffenbarungszeit nachgewiesen werden, was wiederum den Nachweis einer niedrigen Restfehlerwahrscheinlichkeit des Systems ermöglicht, so dass es für bahntechnische Anwendungen zugelassen werden kann

Im folgenden wird ein Ausführungsbeispiel der Erfindung anhand der Zeichnungen näher erläutert. Es zeigen:
- Figur 1: einen Security-Translator, der eine Verbindung zwischen zwei Datennetzen mit unterschiedlicher Sicherheitsstufe herstellt,
- Figur 2: eine detailliertere Ansicht des Security-Translators aus Figur 1,
- Figur 3: die physikalische Verschaltung der Netzwerkkomponenten des Security-Translators aus Figur 1,
- Figur 4: ein Ablaufdiagramm für die Prüfung der Filterfunktion des Security-Translators,
- Figur 5: ein Ablaufdiagramm bei Ausfall der Filterfunktion des Security-Translators,
- Figur 6: ein Ablaufdiagramm für die Prüfung der Watchdog-Schaltung,
- Figur 7: ein Ablaufdiagramm bei Ausfall der Watchdog-Schaltung,
- Figur 8: ein Ablaufdiagramm auf Prüfung von Sequenznummer- und Prüfsummenfehler,
- Figur 9: ein Ablaufdiagramm bei Ausfall der Prüfung auf Sequenznummer- und Prüfsummenfehler und
- Figur 10: einen Prüfplan.

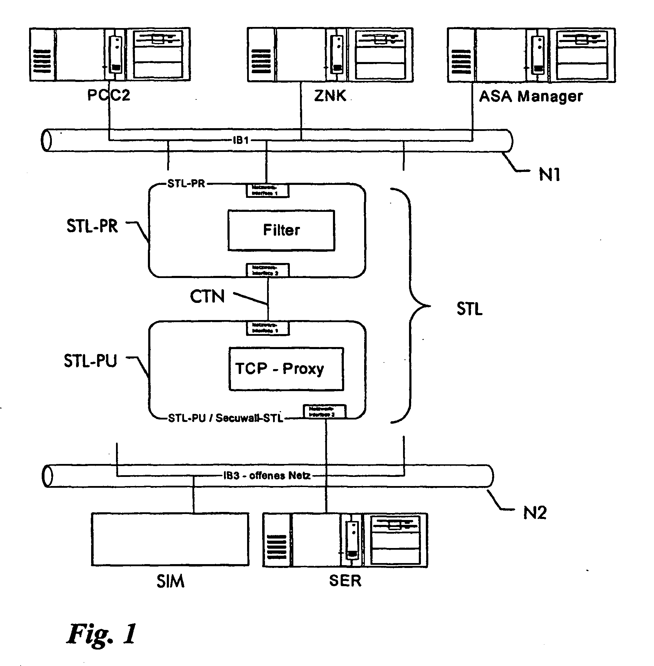

In Figur 1 sind ein erstes Datennetz N1 und ein zweites Datennetz N2 dargestellt. Das erste Datennetz entspricht dem Integritätsbereicht IB1 und das zweite Datennetz entspricht dem Integritätsbereich IB3. Der IB1 ist ein sicherheitsrelevanter Bereich und der IB3 gilt als Bereich niedrigerer Sicherheitsstufe.

Zwischen den beiden Datennetzen ist ein Security-Translator STL angeordnet, der eine sichere Verbindung zwischen den beiden Datennetzen herstellt. Der Security-Translator STL besteht aus einer mit dem Datennetz N2 verbunden herkömmlichen Firewall STL-PU mit TCP-Proxy und einer mit dem Datennetz N1 verbundenen Filtereinrichtung STL-PR. Die Firewall STL-PU und die Filtereinrichtung STL-PR sind durch das TCP/IP Protokoll über ein separates Ethernet Netzwerk CTN miteinander verbunden.

An das Datennetz sind beispielhaft ein Zugnummernkern ZNK, ein Application Supervision Agent Manager ASA Manager und ein Protocol Conversion Computer PCC2 angeschlossen. Dabei handelt sich um an sich bekannte Komponenten, die in einem Stellwerk vorkommen. An das Datennetz N2 sind beispielhaft ein Serielles Subsystem SER und ein Simulator SIM angeschlossen, die an sich ebenfalls bekannt sind und im Netzbereich von Bahnbetreibern vorkommen.

Der Security-Translator STL ist eine Einrichtung, die dazu dient, das Eindringen von Informationen, die signaltechnische Systeme des IB1 in ihrer Funktion und Integrität verletzen könnten, zu verhindern. Der STL verhindert unerlaubten Zugriff von 1B3 nach IB1. Dazu unterstützt er nur die Kommunikation über SBS ähnliche Protokolle, die auf der Basis von TCP/IP transportiert werden. Die Struktur eines Telegramms wird weiter unten genauer erläutert. Es besteht keine IP-Transparenz durch den STL, d.h. es ist z.B. kein PING zwischen den Datennetzen N1 und N2 über den STL möglich.

Das Protokoll ist in der Lage, eine tägliche Verbindungsunterbrechung von bis zu 10 Sekunden zu tolerieren. Dies kann eine Anwendung durch Zwischenspeicherung der nicht erfolgreich versendeten Telegramme und anschließender Wiederholung des Versendens erzielen. Eine weitere Möglichkeit besteht darin, nach festgestellten Sequenznummernfehlern eine neue Aufrüstungsanforderung zu generieren.

Die Firewall STL-PU ist verantwortlich um Angriffe über die Kommunikationsschichten 1-4 (gemäß ISO/OSI Referenzmodel, siehe ISO/OSI-Basic Reference Model ISO/IEC 10731/1994) aus dem Datennetz N2 abzuwehren. Dafür ist eine Firewallkomponente mit TCP-Proxy vorgesehen.

Die Aufgaben der Firewall STL-PU übernimmt im Ausführungsbeispiel das am Markt erhältliche Produkt Secuwall-STL der Firma Secunet. Die Secuwall-STL basiert auf einem speziell minimalisierten und gehärteten Linux-Betriebssystem. Sie verfügt über leistungsstarke Firewall-Funktionalitäten sowie Intrusion Detection & Response-Funktionen. Ein integrierter TCP Proxy sorgt für Sicherheit gegen Angriffe bis einschließlich Kommunikationsschicht 4.

Die Firewall STL-PU dient als Proxy zwischen IB3 Applikationen im Datennetz N2 und der Filtereinrichtung STL-PR, d.h. eine IB3 Applikation baut eine TCP/IP Verbindung zur Firewall STL-PU auf und die Firewall STL-PU unterhält eine zugehörige TCP/IP Verbindung mit der Filtereinrichtung STL-PR. Beim Verbindungsaufbau agiert die Firewall STL-PU als Server, wobei auf nur zuvor zugelassenen TCP-Ports eine Verbindung akzeptiert wird. Die Firewall STL-PU protokolliert abgewehrte Angriffsversuche über das SysLog-Protokol an die Filtereinrichtung STL-PR. Außerdem meldet die Firewall STL-PU regelmäßig ihren Status über SysLog.

Weitere Anforderungen an die Firewall STL-PU sind: Die Firewall STL-PU muss einen sicheren Ausfollzustand einnehmen können. Im sicheren Ausfallzustand muss jede nicht administrative Nutzung der Firewall STL-PU unterbunden werden. Das Neustarten der Firewall STL-PU und der Wiederanlauf nach Einnahme des sicheren Ausfallzustandes darf nur mit manuellem Eingriff erfolgen.

Als Netzwerk Protokoll ist ausschließlich das Internet Protokoll erlaubt. Die IB3 Applikationen kommunizieren mit der Firewall STL-PU ausschließlich über TCP/IP über fest vergebene TCP-Ports. Die Firewall STL-PU ist "Ping-bar". Ein Ping durch die Firewall STL-PU hindurch auf Knoten im Datennetz N1 ist nicht nicht möglich. Das Syslog Protokoll ist zur Versendung von Statusinformationen in den IB1 erlaubt. Alle anderen Netzwerkdienste wie z.B. FTP, http, Telnet, SNMP sind verboten.

Für jede ankommende TCP Verbindung aus dem Datennetz N2 besteht eine Verbindung zur Filtereinrichtung STL-PR. Über zwei separate TCP Verbindungen werden Prüftelegramme, die der Integritütrprüfung dienen (siehe weiter unten), von der Filtereinrichtung STL-PR an die Firewall STL-PU geschickt. Die Prüftelegramme müssen vom Proxy an die Filtereinrichtung STL-PR über zwei dazugehörige Verbindungen wieder zurückgeschickt werden. Telegramme, die aus dem Datennetz N2 kommen, sowie Prüftelegramme der Filtereinrichtung STL-PR werden durch den Proxy verscrambled. Telegramme aus dem Datennetz N1 werden durch den Proxy nicht verscrambled. Die Nutzdaten inklusive Prüftelegramme werden von der Firewall STL-PU empfangen und über die zugeordnete Verbindung wieder versendet. Die empfangenen Daten auf Prüftelegrammverbindungen werden als Lebenszeichen ausgewertet. Wenn innerhalb einer konfigurierbaren Zeit keine Daten empfangen werden, nimmt die Firewall STL-PU den sicheren Ausfallzustand ein.

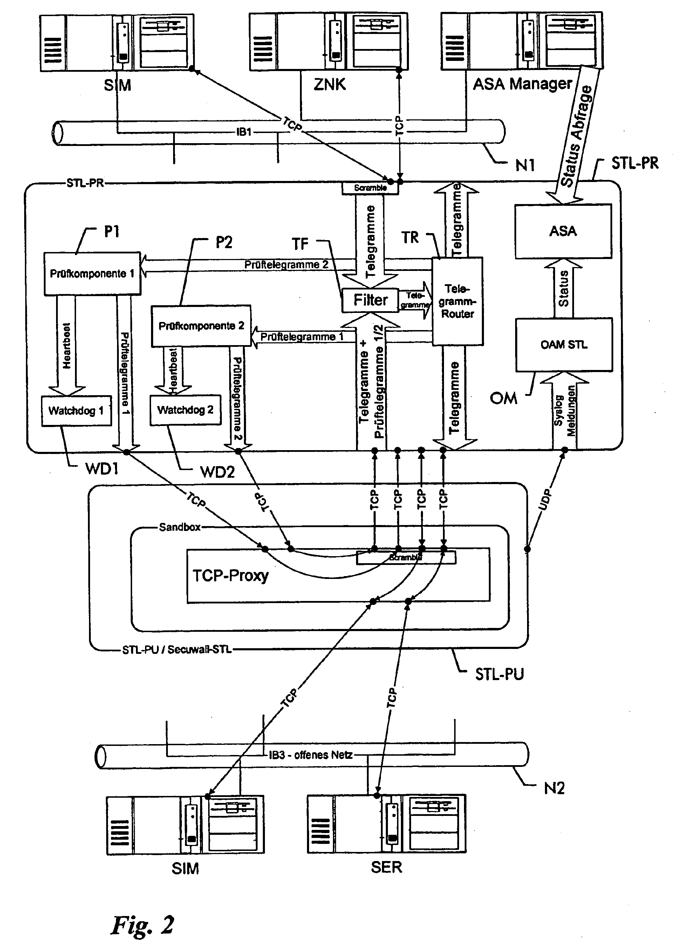

Der Aufbau der Filtereinrichtung STL-PR ist in Figur 2 detaillierter dargestellt. Sie hat die Aufgabe Telegramme die vom Datennetz N2 in das Datennetz N1 gesendet werden, auf Anwendungsebene zu filtern. Filtereinrichtung STL-PR hat den Status des gesamten STL Systems an das Systemmanagement des IB1 zu melden. Sie muss permanent ihre Komponenten auf Funktionsfähigkeit überprüfen. Gestörte oder ausgefallene Komponenten führen zum sicheren Ausfallzustand.

Die Filtereinrichtung STL-PR ist mit der Firewall STL-PU über ein separates Ethernet Netzwerk (TCP/IP) verbunden. Über die erste Netzwerkkarte existieren n (= Anzahl der Kommunikationsbeziehungen zwischen Datennetz N2 und Datennetz N 1) TCP-Verbindungen zur STL-PU. Auf diesen Verbindungen werden Daten zwischen N2 und N1 übertragen.

Es existieren zusätzlich 4 (2 sendende, 2 empfangende) separate TCP-Verbindungen, über die nur Prüftelegramme übertragen werden. Diese Prüftelegramme werden von der Filtereinrichtung STL-PR generiert und über die Firewall STL-PU an die STL-PR zurück geschickt. Die Prüftelegramme dienen der Integritätsprüfung

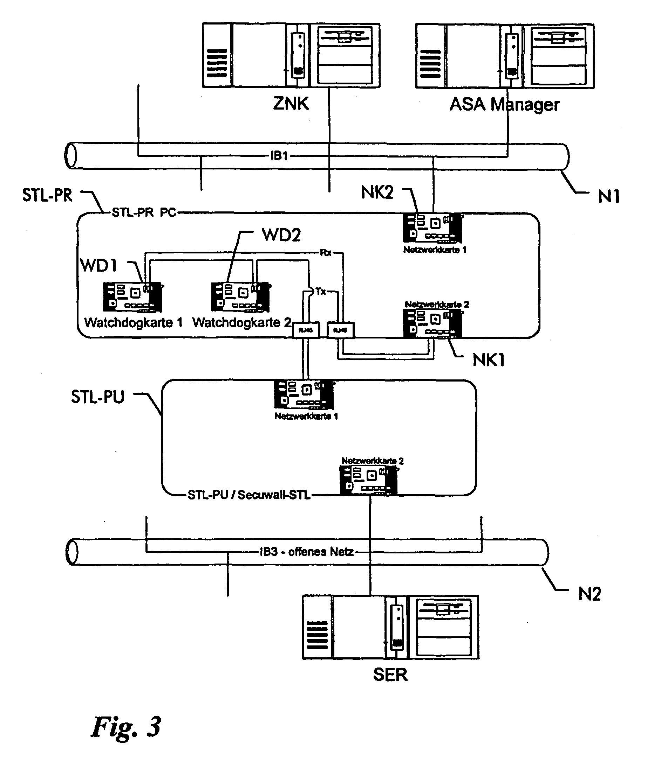

Realisiert ist die Filtereinrichtung STL-PR mit einem handelsüblichen Windows-PC mit zwei Netzwerk- und zwei Watchdogkarten WD1 und WD2. Auf dem PC laufen verschiedene Programmmodule, nämlich ein Telegrammfilter TF, ein Telegramm-Router TR, eine erste Prüfkomponente P1, eine zweite Prüfkomponente P2, ein OAM Modul OM und ein Application Supervision Agent ASA. Während in Figur 2 der logische Ausbau der Filtereinrichtung STL-PR dargestellt ist, zeigt Figur 3 deren physikalischen Aufbau

Die Watchdog-Schaltungen WD1, WD2 sind separate Steckkarten mit eigenem Microcontroller, die in der Filtereinrichtung STL-PR eingebaut ist. Die Watchdogkarten arbeiten autonom vom restlichen PC und sind über das PCI Interface ansprechbar.

Die Watchdog-Schaltung WD1, WD2 hat die Aufgabe den sicheren Ausfallzustand herzustellen. Hierzu ist die Empfangsleitung der Netzwerkverbindung zwischen STL-PU und STL-PR mit einem Relais auf der Watchdogkarte verdrahtet (siehe Figur 3). Die Watchdog-Schaltung WD1, WD2 hat eine Schnittstelle zu seiner zugehörigen Prüfkomponente P1, P2, über die sie Lebenszeichen empfängt. In der Watchdog-Schaltung ist ein festes Zeitintervall konfiguriert, innerhalb dessen Lebenszeichen von der Prüfkomponente empfangen werden müssen (Watchdog-Timeout). Werden keine Lebenszeichen mehr empfangen, wird die Netzwerkverbindung CTN zwischen STL-PU und STL-PR durch das Abfallen des Relais physikalisch unterbrochen. Die Watchdog-Schaltung ist redundant ausgelegt. Jede Watchdog-Schaltung WD1, WD2 wird von einer zugehörigen Prüfkomponente P1, P2 mit Lebenszeichen versorgt. Es findet innerhalb der vorgegebenen Ausfolloffenbarungszeit der Watchdogkarte eine Watchdogprüfung statt.

Im folgenden werden die einzelnen Programmmodule näher erläutert. Die unteren Kommunikationsschichten sorgen dafür, dass an den Telegrammfliter TF nur komplett zusammengefügte Anwendungstelegramme weitergereicht werden. Das heißt das Längenfeld des Telegramms entspricht immer der tatsächlichen Länge des Telegramms.

Alle von N2 und N1 am STL-PR ankommende Daten und die Prüftelegramme durchlaufen den Telegrammfilter TF . Nur zugelassene und geprüfte Telegramme passieren den Telegrammfilter TF. Nicht zugelassene und ungültige Telegramme werden verworfen und protokolliert. Wird ein Telegramm vom Telegrammfilter TF durchgelassen, dann wird es weiter an den Telegramm-Router TR geleitet.

Die Telegramme haben im Ausführungsbeispiel die folgende festgelegte Struktur. Dabei sind für den Einsatz im Leit- und Bediensystem des Stellwerkes die in Tabelle 1 aufgeführten Felder definiert

**Tabelle 1: Telegrammstruktur**

| Byte-Nr | Bit 7 | Bit 6 | Bit 5 | Bit 4 | Bit 3 | Bit 2 | Bit 1 | Bit 0 |
|---|---|---|---|---|---|---|---|---|
| 0 | Nutzdatenlänge ( Bytes ab einschließlich Nutzdatenlänge bis einschließlich Sicherungsanhang ) | | | | | | | |
| 2 | Empfänger ( binärcodiert, Byte 1 bis 3 ) | | | | | | | |
| 5 | Absender ( binärcodiert, Byte 1 bis 3 ) | | | | | | | |
| 8 | Beliebige Daten | | | | | | | |
| L-8 | Sicherungsanhang¹⁾ (optional, bei eingeschalter MD4 Anhangsprüfung zwingend) | | | | | | | |

| | | | | | | | | |
|---|---|---|---|---|---|---|---|---|
| ¹⁾ L entspricht der im Telegramm enthaltenen Nutzdatenlänge. | | | | | | | | |

Der Aufbau des Telegramms kann für andere Einsatzfälle des Security-Translators STL anders lauten. Die Struktur des Telegramms ist nicht zwingend für den Telegrammfliter TF, weil dieser im Prinzip auf beliebige Muster an beliebigen Stellen im Telegramm filtern kann. Die für den Einsatz im Leit- und Bediensystem des Stellwerkes verwendeten Module der unteren Kommunikationsschichten benötigen aber die genaue Spezifikation des Längenfeldes , um das Telegramm aus dem TCP-Datenstrom wieder zusammenzusetzen. Der Telegram-Router TR benötigt die genaue Spezifikation der Routinginformation (Empfänger und Absender). Wird für andere Einsatzfälle die Struktur des Telegramms geändert, müssen diese Module entsprechend angepasst werden.

Am Eingang des Filters liegen die Telegramme in einem verscrambleden Zustand vor, d.h. alle Bits der empfangenen Daten sind mit einem vorgegebenen Bitmuster durch ein XOR verknüpft. Von Filtereinrichtung STL-PU empfangene Telegramme wurden durch den Firewall STL-PU verscrambled. Aus dem Datennetz N2 empfangene Telegramme wurden hinter dem N1-seitigen Eingang des STL-PR verscrambled. Am Filtereingang werden die Telegramme mit Hilfe des XOR in den ursprünglichen Zustand wieder hergestellt. Das Scramblen am N1-seitigen Eingang ist nur notwendig, damit der Telegrammfilter TF in beide Richtungen gleich funktioniert und hat keine sicherheitstechnische Funktion.

Der Telegrammfliter TF verwendet mehrere Fliteregeln. Jede Filterregel wiederum enthält eine Anzahl von Bedingungen. Bei Zutreffen aller Bedingungen gilt die Filteregel als erfüllt, das Telegramm kann passieren.

Die Filterregeln werden bei Start des Security-Translators STL aus einer Filterregeldatei ausgelesen. Grundsätzlich kann auf beliebige Muster auf Basis von Offset und Länge gefiltert werden. Damit ist z.B. auch Filterung auf Telegrammtyp (Infoart), Techniktyp Senderadresse, Techniktyp Empfangsadresse möglich.

Es gibt drei verschiedene Arten von Filterregeln: Positiv-, Negativ- und Prüfregel. Die Reihenfolge der Fliterregeln nach denen ein Telegramm geprüft wird, ist fest vorgegeben:
1. Liste der negativen Regeln
2. Liste der positiven Regeln
3. Prüfregel

Positiv-Regeln sollten sich gegenseitig ausschließen. Bei Zutreffen einer negativen Filteregel wird das Telegramm verworfen und protokolliert. Trifft eine positive Regel für ein Telegramm zu, wird das Telegramm durchgelassen und weitergeleitet. Die Prüfregel gilt den speziellen Prüftelegrammen, die für die Überwachung der Integrität des Security-Translators STL notwendig sind. Trifft keine der Filterregeln auf ein Telegramm zu, dann wird es protokolliert und verworfen.

Eine Filterregel besteht aus den in Tabelle 2 wiedergegebenen Elementen.

**Tabelle 2: Aufbau von Filterregeln**

| **Feldname** | **Syntax** | **Wertigkeit** | **Beschreibung** |
|---|---|---|---|
| Name | String | Zwingend | Legt den Namen eine Filterregel fest. Prüfregeln werden über den Namen "Prüfregel" identifiziert. Andere Namen sind zur Zuordnung in der Protokollierung gedacht. |
| Durchsatz | Ganzzahl | Zwingend | Legt die Anzahl der Telegramme pro Sekunde fest, die diesen Filterkanal maximal passieren dürfen. Wenn der Durchsatz auf 0 eingestellt, dann ist dies eine Negativregel. Kein Telegramm dieses Musters darf den Filter passieren. |
| Startposition 1 | Ganzzahl | Zwingend | Legt die Startposition des zu prüfenden Telegrammausschnitts fest. |
| Muster 1 | hexadezimale Bytefolge | Zwingend | Definiert das Muster gegen das der Telegrammausschnitt geprüft wird. |
| Bitmaske 1 | hexadezimale Bytefolge | Optional | Es kann definiert werden, welche Bits beim Vergleich herangezogen werden und welche nicht. Wenn nicht vorhanden werden alle Bits geprüft. |
| ... | | | Position und Muster können sich beliebig wiederholen. Jeder Position und Länge muss ein Muster zugeteilt sein. |
| Startposition n | | Optional | |
| Muster n | | Optional | |
| Bitmaske n | | Optional | |

Die Struktur der Filterdatei ist mit dem nachfolgenden XML Schema definiert:

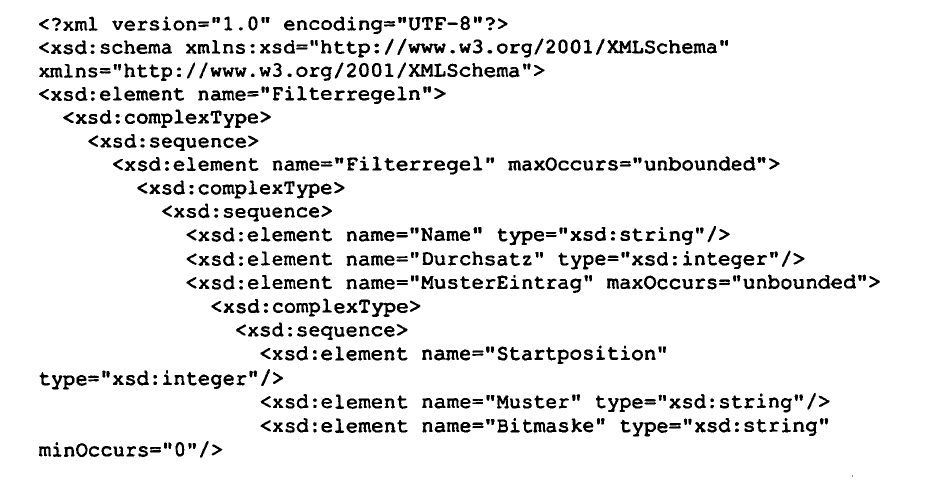

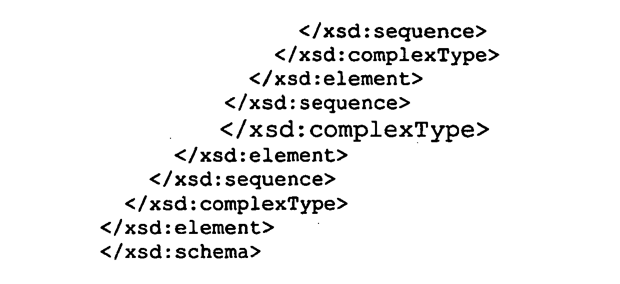

Beispiel einer Filterregel Datei im XML Format:

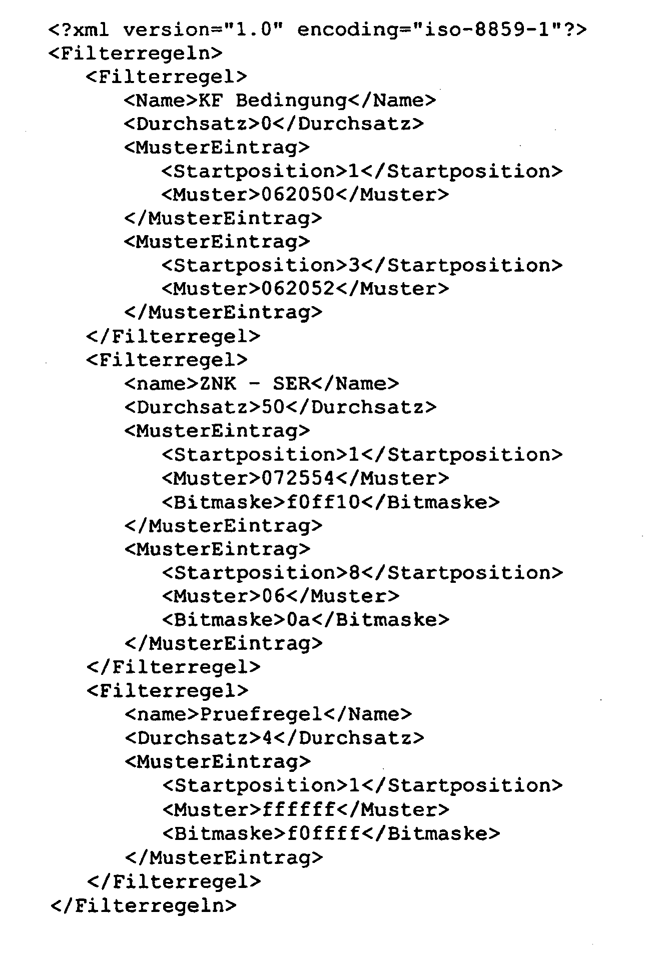

Von dem Telegrammfilter wird optional auch noch eine MD4 Anhangsprüfung des SBS Protokolls durchgeführt, die ist über eine Konfigurationsdatei aktivierbar ist. Der Security-Translator STL bildet bei eingeschalteter Funktion den MD4 Hashcode am Eingang des Telegrammfilter TF über jedes ungeprüfte Telegramm und vergleicht diesen mit dem übertragenen MD4 Anhang des Telegramms. Dabei werden jeweils nur die niederwertigen 64 Bit des MD4 Hashcodes miteinander verglichen, da in einem SBS Telegramm nur die Hälfte des 128 Bit MD4 Hashcodes übertragen werden. Nicht konforme Telegramme werden protokolliert und verworfen.

Außerdem erfüllt der Telegramm-Filter TF die Funktion einer Durchsatzbegrenzung. Um eine Überflutung der IB1-Applikationen mit erlaubten Telegrammen zu verhindern, wird der Durchsatz im STL-PR durch den Telegrammfilter TF begrenzt. Positive Filterregeln und Prüfregeln werden als logischer Filterkanal betrachtet, durch die Telegramme den Filter passieren können. Es ist für jede Positivregel ein Schwellwert (Anzahl Telegramme pro Zeiteinheit) über eine Konfigurationsdatei einstellbar. Telegramme die den Schwellwert überschreiten, werden protokolliert und verworfen.

Der Telegramm-Router TR erfüllt Routing-Funktionalität auf Basis von SBS-Adressen. Auf der Filtereinrichtung STL-PR befindet sich eine projektierte Routing-Tabelle. Der SBS-Router extrahiert Sender und Empfangs SBS-Adresse aus jedem Telegramm und routet Telegramme anhand der Projektierung. Das bedeutet er leitet die Telegramme über die ermittelte Verbindung weiter. In der Routing-Tabelle sind auch Einträge für die Prüftelegramme enthalten, die als Ziel die entsprechende Prüfkomponente P1, P2 besitzen.

Die Prüfkomponenten P1, P2 haben die Aufgabe die Funktionsfähigkeit des Telegrammfilter TF, der Watchdog-Schaltungen WD1, WD2 und der Prüfkomponente P1, P2 selbst zu prüfen. Es wird ständig geprüft, ob der Telegrammfilter TF die Filterregeln kennt und anwendet. Dazu werden periodisch spezielle Prüftelegramme an den Firewall STL-PU und von dort in die Filterungseinrichtung STL-PR zurück gesendet.

Die Prüfkomponenten generieren und schicken Prüftelegramme nach einem bestimmten Plan ab. Im folgenden wird dieser als Prüfplan bezeichnet. Beide Prüfkomponenten arbeiten zyklisch, jedoch zeitlich versetzt den gleichen Prüfplan ab. Der zeitliche Versatz wird erreicht, indem die Prüfkomponenten P1, P2 zeitversetzt gestartet werden und den Prüfplan mit unterschiedlichem Start-Index beginnen. Beim Hochfahren des STL-PR wird zuerst die Prüfkomponente P1 gestartet und beginnt bei Index1 die Abarbeitung des Prüfplans. Die Prüfkomponente P2 wird dann 15s später gestartet und beginnt bei Index11. Die Prüfkomponente P1 beginnt somit nach wenigen Minuten die Watchdog_Schaltung WD1 zu überprüfen, die Prüfkomponente P2 überprüft erst nach 24 Std. den Watchdog-Schaltung WD2. Somit wird abwechselnd alle 24 h eine der beiden Watchdog-Schaltungen WD1, WD2 überprüft.

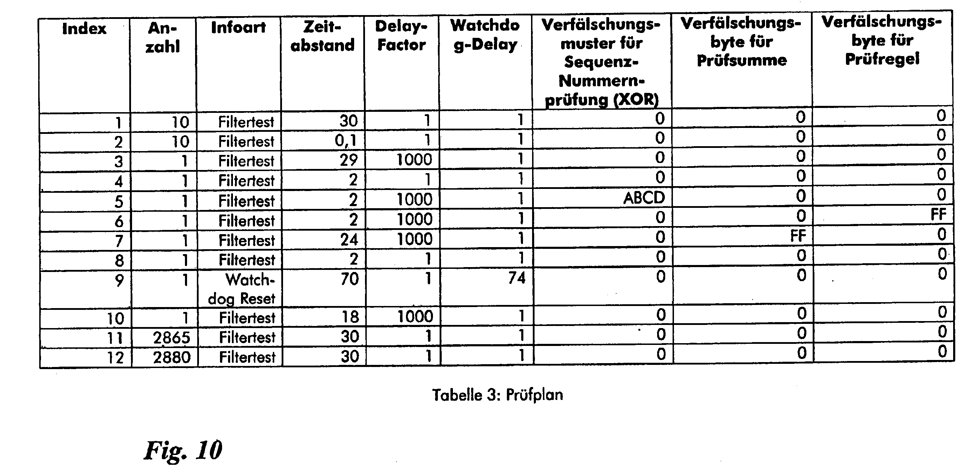

Der Prüfplan ist als Tabelle 3 in Figur 10 abgebildet. Er enthält Abschnitte für Filtertest, Durchsatzbegrenzungsprüfung, Sequenznummerncheck, Prüfsummencheck und Watchdogprüfung. Der Zeitabstand zwischen zwei Prüftelegrammen ist dabei kleiner als der Watchdog-Timeout. Die Prüfkomponente selbst hat kein Wissen über die Funktion des jeweiligen Abschnitts. Die Felder Infoart, Delay Faktor und Watchdog Delay werden dem Prüfplan entnommen und in das zu sendende Prüftelegramm eingesetzt. Die Prüfkomponente verundet die eigene Sequenznummer mit einem Verfälschungsmuster laut Prüfplan und trägt diese in das zu sendende Prüftelegramm ein. Tatsächlich wird die Sequenznummer wird nur einmal innerhalb des Prüfplans wirklich verfälscht (Senden eines Telegramms mit falscher Sequenznummer). Das Verfälschungbyte wird gemäß Prüfplan in das Prüftelegramm eingetragen. Für Prüftelegramme wird auch ein MD4 Anhang gebildet.

Telegramme, die vom Telegrammfilter verworfen werden müssen werden als Poisoningtelegramme bezeichnet, da sie im Falle dass sie fehlerhaft nicht verworfen werden, zur Unterbrechung der Verbindung durch einen der Watchdogs führen.

Ein Poisoningtelegramm ist ein spezielles Prüftefegramm. Wird es von einer Prüfkomponente P1, P2 empfangen, wird der sichere Ausfallzustand eingenommen. Ein Poisoningtelegramm enthält dafür einen sehr hohen Delay Faktor. Empfängt eine Prüfkomponente P1, P2 ein solches Telegramm, wird das laut Prüfplan nächste zu sendende Telegramm so stark verzögert, das keine Lebenszeichen innerhalb des Watchdog-Timeouts gesendet werden. Somit unterbricht die zugehörige Watchdog-Schaltung das Netzwerk dauerhaft. Dieser Zustand lässt sich nicht durch weitere Prüftelegramme ändern, der Empfang eines Poisoningtelegramms ist somit irreversibel.

Des weiteren ist noch ein Watchdog-Reset-Telegramm definiert. Empfängt eine Prüfkomponente ein Prüftelegramm mit dieser speziellen Infoart, initialisiert sie die Watchdogkarte. Das Relais der Watchdogkarte ist im initialen Zustand angezogen, d.h. die Verbindung zwischen STL-PR und STL-PU ist nicht unterbrochen.

Der Prüfplan ist beispielhaft (Watchdog-Timeout=67s) wie folgt zu lesen:
1. Sende 10 mal alle 30s ein Prüftelegramm
2. Warte 30s
3. Sende 10 mal alle 100 ms ein Prüftelegramm
4. Warte 10ms
5. Sende 1 Poisoningtelegramm
6. Warte 29s
7. Sende 1 Prüftelegramm
8. Warte 2 s
9. Sende 1 Poisoningtelegramm mit falscher Sequenznummer
10.Warte 2s
11.Sende 1 Poisoningtelegramm mit Verfälschungsbyte für Prüfregel = 0xFF
12.Warte 2s
13.Sende 1 Poisoningtelegramm mit Verfälschungsbyte für Prüfsumme= 0xFF
14.Warte 24s
15.Sende 1 Prüftelegramm
16.Warte 2s
17.Sende 1 Watdogreset Telegramm
18.Warte 70s
19.Sende 1 Poisoningtelegramm
20.Warte 18s
21.Sende 2865 mal alle 30s ein Prüffelegramm
22.Warte 30s
23.Sende 2880 mal alle 30s ein Prüftelegramm (entspricht 24 Std.)
24.Beginne bei 1.

Die Prüftelegramme haben folgenden Aufbau:
- Länge: Telegrammlänge
- Senderadresse: STL-spezifische SBS-Adresse der Komponente, die das Telegramm sendet.
- Empfängeradresse: STL-spezifische SBS-Adresse der Komponente, die das Telegramm empfängt.
- Sequenznummer: fortlaufende Nummer
- Infoart: STL-spezifische Prüftelegramminfoart (Filtertest, Watchdog Reset)
- Delay Faktor: Delay Faktor
- Watchdog Delay: Watchdog Delay
- Prüfsumme: Prüfsumme über Speicherabbild der statischen Systemdaten
- Verfälschungsbyte für Prüfsumme: für die gezielte Verfälschung der Prüfsumme
- Verfälschungsbyte für Prüfregel: für die gezielte Verfälschung des Prüftelegramms
- MD4 Anhang: Prüfsumme über das gesamte Telegramm

Die Sequenznummern werden zur Prüfsummenbildung benötigt, durch sie wird jedes Prüftelegramm und somit auch die Prüfsumme eines jeden Prüftelegramms unterschiedlich. Alle Prüftelegramme enthalten eine fortlaufende Sequenznummer. Jede Prüfkomponente setzt beim Senden eines Prüftelegramms hier die Anzahl ihrer bisher gesendeten Telegramme ein. Eingehende Prüftelegramme mit einer Sequenznummer kleiner als die zuvor empfangene werden verworfen.

Die Prüfkomponente enthält einen Zeitabstands-Faktor in Ihren Daten. Beim Empfang eines Prüftelegramms, wird der enthaltene Delay-Faktor mit dem Zeitabstands-Faktor multipliziert und das Ergebnis als neuer Zeitabstands-Faktor abgespeichert. Der zeitliche Abstand zwischen dem Senden zweier Prüftelegramme berechnet sich aus dem Produkt Zeitabstands-Faktor mal Zeitabstand (siehe Spalte Zeitabstand im Prüfplan). Die Prüfkomponente wartet diese Zeit, bevor Sie eine Nachricht (Lebenszeichen oder Reset) an den Watchdog schickt.

Das OAM Modul schreibt Ereignisse in Dateien; was allgemein auch als "protokollieren" bezeichnet wird. Folgende Ereignisse werden protokolliert:
- Nicht zugelassene Telegramme
- Telegramme die den Schwellwert überschreiten
- den sicheren Ausfallzustand,
- Vom STL-PU über SysLog gemeldete Ereignisse (Er besitzt eine UDP Verbindung zum STL-PU über die SysLog Meldungen empfangen werden).
- Der Logger kann über eine Konfigurationsdatei so eingestellt werden, das er den gesamten Datenverkehr über den STL mitprotokolliert, d.h. alle Telegramme aufzeichnet.

Der OAM unterhält eine Schnittstelle zum ASA. Grundsätzlich werden alle zuvor erwähnten Ereignisse an den ASA gemeldet. Um eine Systemüberlastung zu vermeiden z.B. durch permanente Durchsatzüberschreitung, kann konfiguriert werden wie viele Ereignisse pro Zeiteinheit maximal gemeldet werden. Der OAM meldet zyklisch den Status des STL an den ASA.

Der ASA hat die Aufgabe die vom OAM Modul gemeldeten Ereignisse dem IB1 Systemmanagement im Datennetz N1 zur Verfügung zu stellen. Weiterhin überwacht der ASA, ob das OAM Modul zyklisch den Status des STL meldet. Ist dies nicht der Fall, wird eine Fehlermeldung an das Systemmanagement des IB1 weitergemeldet.

Im folgenden wird beschrieben, wie die Integritätsprüfung der einzelnen Funktionen der Filterungseinrichtung STL-PR abläuft.

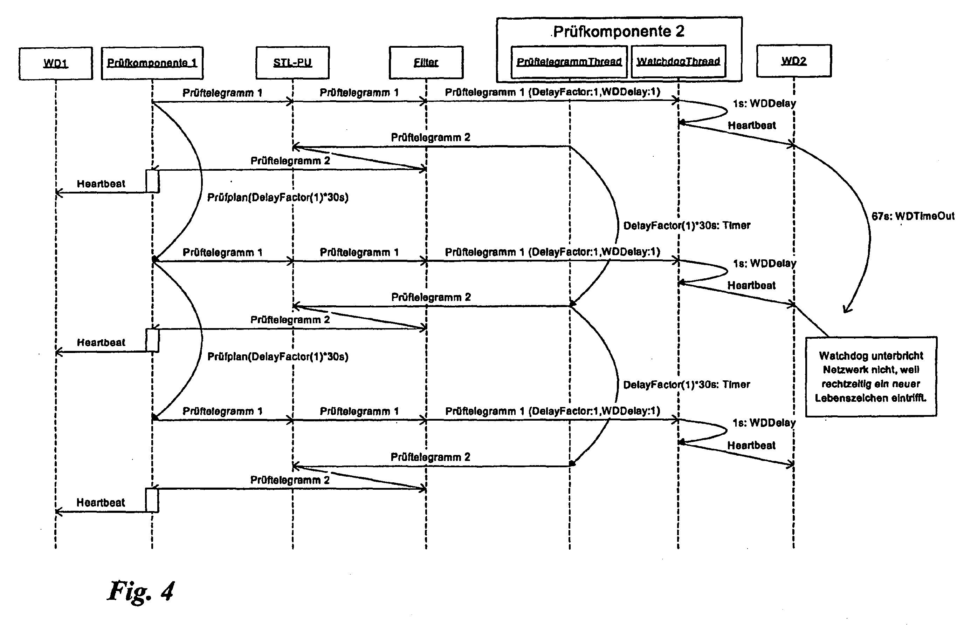

Die Funktion des Telegrammfilters TF muss im laufendem Betrieb ständig überprüft werden. Dies geschieht mittels spezieller Filterregelprüftelegramme. Das Prüftelegramm passt nur durch den Prüftelegrammfilterkanal, d.h. es durchläuft zuvor alle negativen und positiven Filterregeln des Filterregelwerks. Die letzte Filterregel ist eine positiv Regel für Prüftelegramme. Somit werden Prüftelegramme als zugelassen gewertet und über den Telegramm-Router TR an die Prüfkomponente P1, P2 weitergeleitet. Wenn die Prüfkomponente P1, P2 dieses Prüftelegramm empfangen hat, schickt Sie ein Lebenszeichen an ihre Watchdog-schaltung WD1, WD2. Somit ist gewährleistet das der Telegrammfilter TF funktioniert, d.h. die Filterregeln angewendet werden. Fehlender Empfang von Prüftelegrammen in den Prüfkomponenten P1, P2 führt zum Aussetzen der Lebenszeichen an die Watchdog-Schaltungen WD1, WD2. Das Szenario der Filterprüfung ist in einem Ablaufdiagramm in Figur 4 dargestellt.

Die Prüfkomponenten P1, P2 schicken sich gegenseitig anhand ihrer Prüfplane Prüftelegramme. Diese Telegramme dienen zur Fliterprüfung und als Lebenszeichentrigger für die Watchdog-Schaltungen WD1, WD2. Der Prüfplan wird durch den in ankommenden Telegrammen enthaltenen Delay-Faktor beeinflusst. Im Normalfall ist der Delay Faktor = 1, d.h. der Prüfplan bleibt unbeeinflusst. Die Prüfkomponente schickt nach Ablauf des Watchdog-Delays (aus empfangenen Prüftelegramm ausgelesen) ein Lebenszeichen an den ihre Watchdog-Schaltung. Durch dieses Verfahren ist gewährleistet dass beide Watchdog-Schaltungen mit Lebenszeichen versorgt werden und die Netzwerkverbindung CTN bestehen bleibt.

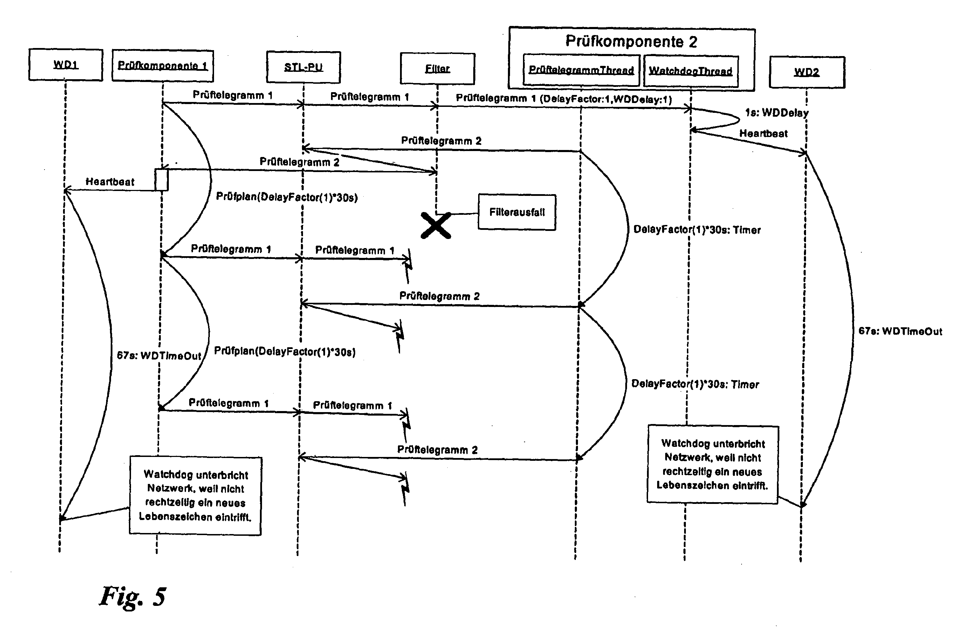

Das Szenario bei Filterausfall ist als Ablaufdiagramm in Figur 5 dargestellt.
1. Fall: Der Telegrammfilter TF gilt als ausgefallen, wenn die Prüftelegramme den Filter nicht mehr passieren. Die Prüfkomponenten P1, P2 empfangen dann keine Prüftelegramme mehr, d.h. es werden keine Lebenszeichen mehr an die Watchdog-Schaltungen WD1, WD2 geschickt. Die Watchdog-Schaltungen WD1, WD2 unterbrechen dann dauerhaft die Netzwerkverbindung CTN. Somit ist der sichere Ausfollzustand hergestellt.
2. Fall: Der Telegrammfilter TF gilt als ausgefallen, wenn alle Telegramme den Filter passieren. Laut Prüfplan wird ein gezielt in einem Byte verfälschtes Poisoning-Telegramm versendet. Es ist dabei noch ein Prüftelegramm aber es entspricht nicht der Prüftelegrammregel des Telegrammfilters TF. Es würde bei funktionierendem Telegrammfliter verworfen werden. Des weiteren wird der Fall zusätzlich während der Durchsatzbegrenzungsprüfung offenbart werden, da bei nicht funktionierender Durchsatzbegrenzung auch ein Poisoningtelegramm empfangen wird. Somit werden keine Prüftelegramme mehr versendet. Die Watchdog-Schaltungen unterbrechen dann dauerhaft die Netzwerkverbindung CTN und es ist der sichere Ausfallzustand hergestellt.

Zusätzlich nimmt auch die Firewall STL-PU den sicheren Ausfallzustand ein, da über sie keine Prüftelegramme mehr übertragen werden.

In der Filterregel für Prüftelegramme ist auch eine mengenmäßige Begrenzung konfiguriert. Die Prüfkomponenten schicken in regelmäßigen Abständen einen Burst von Prüftelegrammen. Das letzte Telegramm eines solchen Bursts ist immer ein spezielles Poisoningtelegramm. Wenn die Durchsatzbegrenzung funktioniert, kann ein solches Poisoningtelegramm niemals eine Prüfkomponente P1, P2 erreichen, da es bereits im Telegrammfilter TF verworfen wird. Bei Ausfall der Durchsatzbegrenzung empfängt die Prüfkomponente P1, P2 dieses Poisoningtelegramm, die Prüfkomponente P1, P2 schickt dann keine Lebenszeichen mehr an die Watchdog-Schaltung. Damit wird der sichere Ausfallzustand erreicht.

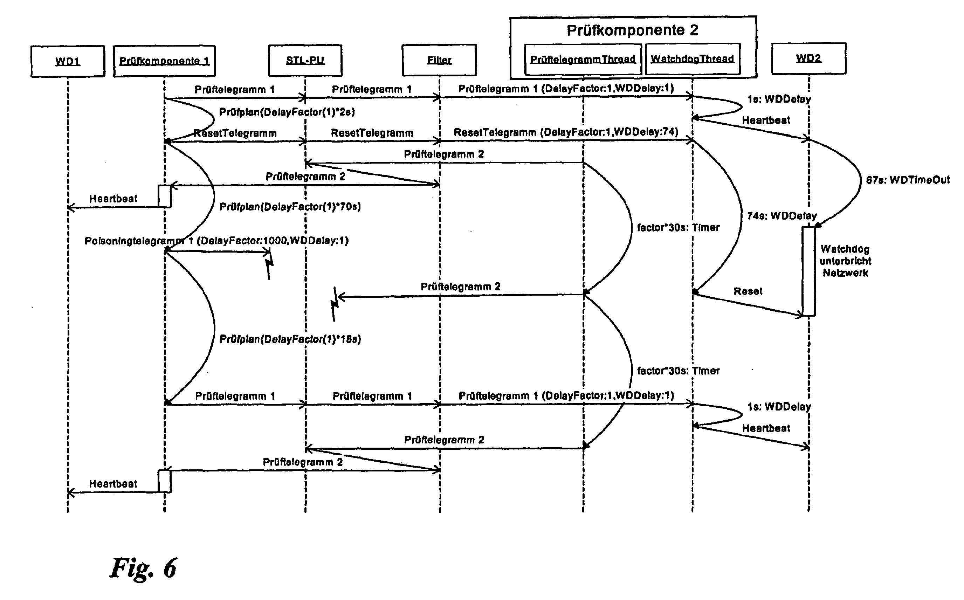

In Figur 6 ist in Form eines Ablaufdiagramms die Überprüfung der Watchdog-Schaltungen WD1, WD2 dargestellt. Dabei wird in regelmäßigen Abständen geprüft, ob jede Watchdog-Schaltung WD1, WD2 den sicheren Ausfallzustand herstellen kann. Der Prüfplan der Prüfkomponenten enthält einen Abschnitt für die Watchdogprüfung. Die Prüfkomponente P1 schickt anhand des Prüfplans ein spezielles Watchdogreset Telegramm. In diesem Prüftelegramm ist der Watchdog Delay größer als der Watchdog-Timeout der Watchdog-Schaltung. Die Prüfkomponente P2 generiert aufgrund des Empfangs dieses Watchdog-Reset Telegrams ein Reset Befehl an die Watchdog-Schaltung WD2 nach Ablauf des im Telegramm enthaltenen Watchdog Delays. Die Prüfkomponente P1 schickt aufgrund ihres Prüfplans zunächst keine weiteren Prüfrelegramme. Die Watchdog-Schalltung WD2 bekommt somit kein Lebenszeichen innerhalb seines Watchdog-Timeouts und unterbricht das Netzwerk solange, bis sie einen Reset empfängt. Die Prüfkomponente P1 schickt direkt nach dem Watchdog-Reset Telegramm ein Poisoningtelegramm an die Prüfkomponente P2. Dieses Telegramm erreicht die Prüfkomponente P2 jedoch nicht, da die Watchdog-Schaltung WD2 das Netzwerk unterbrochen hat. Die Prüfkomponente P1 schickt daraufhin wieder "normale" Prüftelegramme an die Prüfkomponente P2, welche die Lebenszeichen an den Watchdog-Schaltung WD2 triggern, die mittlerweile durch den Reset die Netzwerkverbindung wieder hergestellt hat.

Das gleiche Szenario wird zeitversetzt (laut Prüfplan) auch von der Prüfkomponente P2 gefahren und somit Watchdog-Schaltung WD1 überprüft.

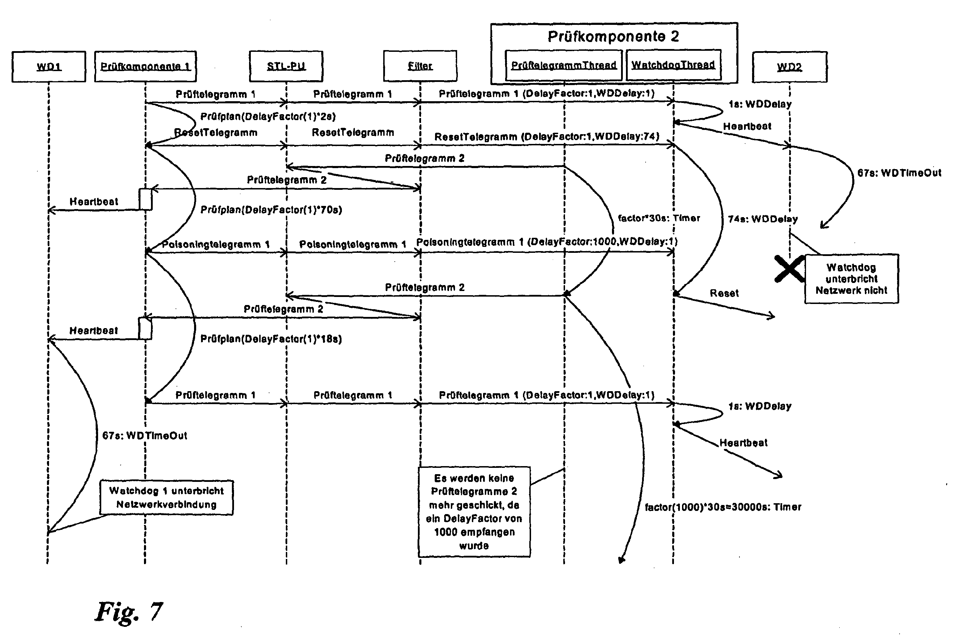

In Figur 7 ist in einem Ablaufdiagramm das Szenario gezeigt, dass eine Watchdog-Schatung ausfällt. Bei ausgefallener Watchdog-Schaltung WD2 wird das Netzwerk nicht unterbrochen, d.h. die Prüfkomponente P2 empfängt das Poisoningtelegramm. Dies führt in der Prüfkcmponente P1 zum Aussetzen der Lebenszeichen an die Watchdog-Schaltung WD2, die dann das Netzwerk unterbricht. Somit wird auch bei Ausfall einer Watchdog-Schaltung WD1 durch die zweite Watchdog-Schaltung WD1 der sichere Ausfallzustand erreicht. Das gleiche Szenario gilt für "Watchdog-Schaltung WD1 ausgefallen".

Beide Prüfkomponenten überprüfen sich gegenseitig. Die Prüfkomponente P1 schickt Prüftelegramme an die Prüfkomponente P2, die Prüfkomponente P2 schickt Prüftelegramme an die Prüfkomponente P1. Bei Ausfall oder Störung einer Prüfkomponente werden keine Lebenszeichen mehr an die zugehörige Watchdog-Schaltung geschickt. Damit wird der sichere Ausfallzustand erreicht.

Es wird außerdem sichergestellt, dass bei Start des STL die von der Festplatte einzulesenden Daten nicht verfälscht sind. Hierzu wird nach Einlesen über diese Daten die Prüfsumme gebildet und mit der ebenfalls auf der Festplatte liegenden Prüfsumme verglichen. Bei Differenz wird der Start des Security-Translators STL abgebrochen.

Die eingelesenen statischen Systemdaten und müssen ständig gegen zufällige Verfälschungen im Speicher geprüft werden. Diese Daten werden von verschiedenen Komponenten (Prüfkomponente P1, Prüfkomponente P2, Telegrommfilter TF) in unterschiedlichen Speicherbereichen gehalten. Eine Filterkomponente bildet für jedes empfangene Prüftelegramm einen Prüfsumme über eine Bytefolge bestehend aus:
- Filterregeln im eigenen Speicher
- Prüfplan im eigenen Speicher
- Sequenznummer (Bestandteil des empfangenen Telegramms)

Diese Prüfsumme wird von der Filterkomponente in das Prüftelegramm eingetragen und an den Telegramm-Router TR weitergegeben. Die empfangende Prüfkomponente bildet ebenfalls die Prüfsumme über Filterregeln und Prüfplan im eigenen Speicher sowie empfangener Sequenznummer. Die Prüfkomponente vergleicht die Prüfsumme + Verfälschungsbyte aus dem empfangenen Telegramm mit der eigens berechneten Prüfsumme + Verfälschungsbyte=0 (hart codiert). Stellt die Prüfkomponente eine Differenz fest, so sind die statischen Systemdaten einer Komponente verfälscht. Die erkennende Prüfkomponente verwirft dann dieses Prüftelegramm, d.h. es wird kein Lebenszeichen an den Watchdog geschickt. Mehrere verworfene Prüftelegramme führen in den sicheren Ausfallzustand.

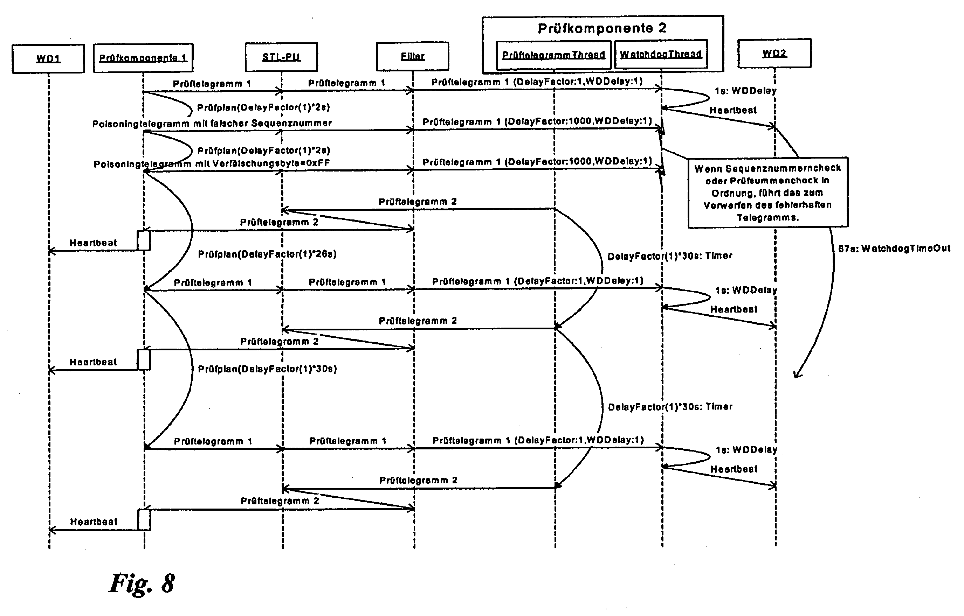

In Figur 8 ist in einem Ablaufdiagramm die Sequenznummernprüfung und der Prüfsummencheck gezeigt. Dazu wird in regelmäßigen Abständen geprüft, ob Telegramme mit ungültiger Prüfsumme verworfen werden. Der Prüfplan der Prüfkomponenten enthält einen Abschnitt für die Prüfsummenprüfung. Die Prüfkomponente schickt anhand ihres Prüfplans ein Poisoningtelegramm mit Verfälschungsbyte = 0xFF. Funktioniert die Prüfung, wird dieses Telegramm verworfen und das laufende System bleibt unbeeinflusst. Außerdem wird in regelmäßigen Abständen geprüft, ob Telegramme mit ungültigen Sequenznummern verworfen werden. Der Prüfplan der Prüfkomponenten enthält einen Abschnitt für die Sequenznummernprüfung. Die Prüfkomponente schickt anhand ihres Prüfplans ein Poisoningtelegramm mit ungültiger Sequenznummer. Funktioniert die Sequenznummernprüfung, wird dieses Telegramm verworfen und das laufende System bleibt unbeeinflusst.

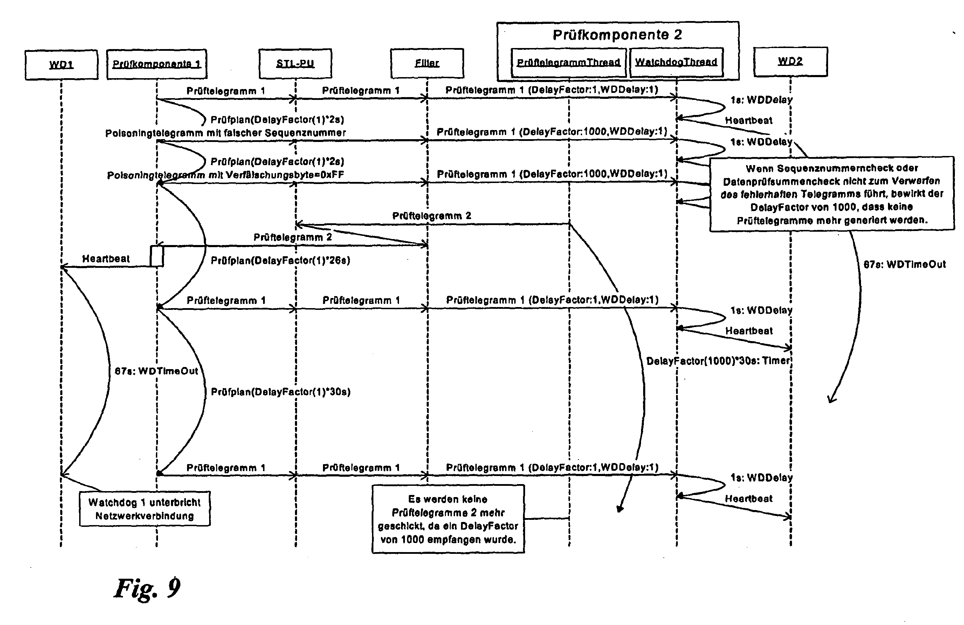

Der Ausfall von Sequenznummernprüfung oder Prüfsummencheck führt zu dem in Figur 9 als Ablaufdiagramm dargestellten Szenario. Funktioniert die Prüfsummenprüfung oder die Sequenznummernprüfung nicht mehr, so erreicht ein Poisoningtelegramm eine Prüfkomponente. Dies führt zum sicheren Ausfallzustand.

Die Erfindung wurde am Einsatzfall des Security-Translator STL am Übergang zwischen IB3 und IB1 beschrieben. Selbstverständlich ist er aber genauso gut für den Einsatz für den IB2-IB1 Übergang geeignet. Ob der Übergang in den IB2 oder IB3 erfolgt, hängt vom Anschluss des ZLV-Bus ab. Der Einfachheit halber wurde nur der Übergang in den IB3 betrachtet, da im anderen Fall die Anforderungen geringer sind.

## Patentansprüche

1. Vorrichtung (STL-PR) zur Verbindung eines Datennetzes (N2) einer niedrigeren Sicherheitsstufe mit einem Datennetz (N1) einer höheren Sicherheitsstufe enthaltend
- einen Telegrammfilter (TF) zur Filterung von Telegrammen aus dem Datennetz (N2) mit niedrigerer Sicherheitsstufe gemäß vorgegebener Filterregeln,
- eine erste Prüfkomponente (P1), welche ausgebildet ist, Prüftelegramme zu erzeugen und über den Telegramm-Filter (TF) an eine zweite Prüfkomponente (P2) zu senden und
- eine von der zweiten Prüfkomponente (P2) angesteuerte Watchdog-Schaltung (WD2), die ausgebildet ist, die Verbindung (CNT) zwischen dem Datennetz (N2) mit niedrigerer Sicherheitsstufe und dem Datennetz (N1) mit höherer Sicherheitsstufe geschlossen zu halten, solange sie von der zweiten Prüfkomponente (P2) regelmäßige Lebenszeichen erhält und die ausgebildet ist, die Verbindung (CNT) automatisch zu unterbrechen, wenn sie über eine vorbestimmte Zeitspanne kein Lebenszeichen erhält,
wobei die zweite Prüfkomponente (P2) ausgebildet ist, nach Erhalt eines gemäß den Filterregeln zugelassenen Prüftelegramms ein Lebenszeichen für die Watchdog-Schaltung (WD2) zu erzeugen und nach Erhalt eines gemäß den Filterregeln nicht zugelassenen Prüftelegramms eine Erzeugung von Lebenszeichen für die Watchdog-Schaltung (WD2) für mindestens die vorbestimmte Zeitspanne zu unterbinden.

2. Vorrichtung nach Anspruch 1, bei der die zweite Prüfkomponente (P2) einen Zeitabstands-Faktor enthält, der den Zeitabstand beeinflusst, nach dem ein Lebenszeichen für die Watchdog-Schaltung (WD2) erzeugt wird, und bei dem die Prüftelegramme einen Verzögerungsfaktor enthalten, der mit einem Verzögerungswert des Timers multipliziert wird, wobei gemäß den Filterregeln zugelassene Telegramme den Verzögerungsfaktor 1 enthalten und gemäß den Filterregeln nicht zugelassene Telegramme einen höheren Verzögerungsfaktor enthalten.

3. Vorrichtung nach Anspruch 1 oder 2, enthaltend eine zweite Watchdog-Schaltung (WD1), die von der ersten Prüfkomponente (P1) angesteuert ist und die ausgebildet ist, die Verbindung (CNT) zwischen dem Datennetzes (N2) mit niedrigerer Sicherheitsstufe und dem Datennetzes (N1) mit höherer Sicherheitsstufe geschlossen zu halten, solange sie von der ersten Prüfkomponente (P1) regelmäßige Lebenszeichen erhält und die ausgebildet ist die Verbindung (CNT) automatisch zu unterbrechen, wenn sie über eine vorbestimmte Zeitspanne kein Lebenszeichen erhält, wobei die zweite Prüfkomponente (P2) ausgebildet ist, Prüftelegramme zu erzeugen und über den Telegramm-Filter (TF) an die erste Prüfkomponente (P1) zu senden und wobei die erste Prüfkomponente (P1) ausgebildet ist, nach Erhalt eines gemäß den Filterregeln zugelassenen Prüftelegramms ein Lebenszeichen für die zweite Watchdog-Schaltung (WD1) zu erzeugen und nach Erhalt eines gemäß den Filterregeln nicht zugelassenen Prüftelegramms eine Erzeugung von Lebenszeichen für die zweite Watchdog-Schaltung (WD1) für mindestens die vorbestimmte Zeitspanne zu unterbinden.

4. Vorrichtung nach Anspruch 3, bei der jede der beiden Prüfkomponenten (P2, P1) einen Zeitabstands-Faktor enthält, der den Zeitabstand beeinflusst, in dem das nächste Prüftelegramm an die andere Prüfkomponente (P1, P2) gesendet wird, und bei dem die Prüftelegramme einen Verzögerungsfaktor enthalten, der mit dem Zeitabstands-Faktor multipliziert und als neuer Zeitabstands-Faktor gespeichert wird, wobei gemäß den Filterregeln zugelassene Telegramme den Verzögerungsfaktor 1 enthalten und gemäß den Filterregeln nicht zugelassene Telegramme einen höheren Verzögerungsfaktor enthalten.

5. Vorrichtung nach Anspruch 3, bei der die erste und die zweite Watchdog-Schaltung (WD2, WD1) in Reihe geschaltet sind.

6. Vorrichtung nach einem der vorhergehenden Ansprüche, enthaltend einen zwischen dem Datennetz (N2) mit niedrigerer Sicherheitsstufe und dem Telegramm-Filter (TF) angeordneten Firewall (STL-PU) mit einem TCP-Proxy, wobei Prüftelegramme von den Prüfkomponenten (P1, P2) über den Firewall (STL-PU) zu dem Telegramm-Filter (TF) geleitet werden und wobei die eine oder beide Watchdog-Schaltungen (WD2, WD1) ausgebildet sind, die Verbindung (CNT) zwischen dem Firewall (STL-PU) und dem Telegramm-Filter (TF) zu unterbrechen.

7. Vorrichtung nach einem der vorhergehenden Ansprüche, bei der der Telegramm-Filter (TF) und die beiden Prüfkomponenten (P1, P2) als Programmmodule ausgebildet sind, die auf einem Computer ablaufen und die erste und/oder die zweite Watchdog-Schaltung (WD1, WD2) als Steckkarten ausgeführt sind, die in Computer eingesteckt sind.

8. Verfahren zur Integritätsprüfung einer Vorrichtung, die zur Verbindung eines Datennetzes (N2) einer niedrigeren Sicherheitsstufe mit einem Datennetz (N1) einer höheren Sicherheitsstufe dient, und die einen Telegrammfilter (TF) zur Filterung von Telegrammen aus dem Datennetz (N2) mit niedrigerer Sicherheitsstufe gemäß vorgegebener Filterregeln und eine Watchdog-Schaltung (WD2) enthält, die ausgebildet ist, die Verbindung (CNT) zwischen dem Datennetz (N2) mit niedrigerer Sicherheitsstufe und dem Datennetz (N1) mit höherer Sicherheitsstufe geschlossen zu halten, solange sie regelmäßige Lebenszeichen erhält und die ausgebildet ist, die Verbindung (CNT) automatisch zu unterbrechen, wenn sie über eine vorbestimmte Zeitspanne kein Lebenszeichen erhält, wobei bei dem Verfahren folgende Schritte ausgeführt werden:
· es werden Prüftelegramme erzeugt und über den Telegramm-Filter (TF) an eine Prüfkomponente (P2) gesendet,
· nach Erhalt eines gemäß den Filterregeln zugelassenen Prüftelegramms erzeugt die Prüfkomponente (P2) ein Lebenszeichen für eine Watchdog-Schaltung (WD2) und
· nach Erhalt eines gemäß den Filterregeln nicht zugelassenen Prüftelegramms unterbindet die Prüfkomponente eine Erzeugung von Lebenszeichen für die Watchdog-Schaltung (WD2) für mindestens eine vorbestimmte Zeitspanne.

## Claims

1. Apparatus (STL-PR) for connecting a data network (N2) pertaining to a lower security level to a data network (N1) pertaining to a higher security level, including
a telegram filter (TF) for filtering telegrams out of the data network (N2) with a lower security level in accordance with predetermined filter rules,
a first checking component (P1) which is designed to generate checking telegrams and to send them via the telegram filter (TF) to a second checking component (P2) and
a watchdog circuit (WD2) activated by the second checking component (P2), which is designed to keep the connection (CNT) between the data network (N2) with a lower security level and the data network (N1) with a higher security level closed as long as it receives regular signs of life from the second checking component (P2) and which is designed to interrupt the connection (CNT) automatically if it receives no sign of life over a predetermined period, the second checking component (P2) being designed to generate a sign of life for the watchdog circuit (WD2) after receipt of a checking telegram that is permitted in accordance with the filter rules and to suppress a generation of signs of life for the watchdog circuit (WD2) for at least the predetermined period after receipt of a checking telegram that is not permitted in accordance with the filter rules.

2. Apparatus according to claim 1, wherein the second checking component (P2) contains a time-interval factor which influences the time interval after which a sign of life for the watchdog circuit (WD2) is generated, and wherein the checking telegrams contain a delay factor which is multiplied by a delay value of the timer, telegrams that are permitted in accordance with the filter rules containing the delay factor 1 and telegrams that are not permitted in accordance with the filter rules containing a higher delay factor.

3. Apparatus according to either claim 1 or claim 2, including a second watchdog circuit (WD1) which is activated by the first checking component (P1) and which is designed to keep the connection (CNT) between the data network (N2) with a lower security level and the data network (N1) with a higher security level closed as long as it receives regular signs of life from the first checking component (P1) and which is designed to interrupt the connection (CNT) automatically if it receives no sign of life over a predetermined period, the second checking component (P2) being designed to generate checking telegrams and to send them via the telegram filter (TF) to the first checking component (P1), and the first checking component (P1) being designed to generate a sign of life for the second watchdog circuit (WD1) after receipt of a checking telegram that is permitted in accordance with the filter rules and to suppress a generation of signs of life for the second watchdog circuit (WD1) for at least the predetermined period after receipt of a checking telegram that is not permitted in accordance with the filter rules.

4. Apparatus according to claim 3, wherein each of the two checking components (P2, P1) contains a time-interval factor which influences the time interval in which the next checking telegram is sent to the other checking component (P1, P2), and wherein the checking telegrams contain a delay factor which is multiplied by the time-interval factor and stored as a new time-interval factor, telegrams that are permitted in accordance with the filter rules containing the delay factor 1 and telegrams that are not permitted in accordance with the filter rules containing a higher delay factor.

5. Apparatus according to claim 3, wherein the first and the second watchdog circuits (WD2, WD1) are connected in series.

6. Apparatus according to any one of the preceding claims, including a firewall (STL-PU) with a TCP proxy, arranged between the data network (N2) with a lower security level and the telegram filter (TF), checking telegrams being routed from the checking components (P1, P2) via the firewall (STL-PU) to the telegram filter (TF), and either or both of the watchdog circuits (WD2, WD1) being designed to interrupt the connection (CNT) between the firewall (STL-PU) and the telegram filter (TF).

7. Apparatus according to any one of the preceding claims, wherein the telegram filter (TF) and the two checking components (P1, P2) take the form of program modules which run on a computer, and the first and/or the second watchdog circuit (WD1, WD2) is constructed as a plug-in card which is plugged into a computer.

8. Process for checking the integrity of an apparatus that serves for connecting a data network (N2) pertaining to a lower security level to a data network (N1) pertaining to a higher security level and that contains a telegram filter (TF) for the purpose of filtering telegrams out of the data network (N2) with a lower security level in accordance with predetermined filter rules and contains a watchdog circuit (WD2) which is designed to keep the connection (CNT) between the data network (N2) with a lower security level and the data network (N1) with a higher security level closed as long as it receives regular signs of life and which is designed to interrupt the connection (CNT) automatically if it receives no sign of life over a predetermined period, the following steps being executed in the course of the process:
- checking telegrams are generated and are sent to a checking component (P2) via the telegram filter (TF),
- after receipt of a checking telegram that is permitted in accordance with the filter rules the checking component (P2) generates a sign of life for a watchdog circuit (WD2) and
- after receipt of a checking telegram that is not permitted in accordance with the filter rules the checking component suppresses a generation of signs of life for the watchdog circuit (WD2) for at least a predetermined period.

## Revendications

1. Dispositif (STL-PR) pour la liaison d'un réseau de données (N2) d'un niveau de sécurité plus faible avec un réseau de données (N1) d'un niveau de sécurité plus élevé contenant :
- un filtre de télégrammes (TF) pour le filtrage de télégrammes provenant du réseau de données (N2) d'un niveau de sécurité plus faible selon des règles de filtrage prédéfinies,
- un premier composant de vérification (P1) qui est conçu pour produire des télégrammes de vérification et pour les envoyer vers un second composant de vérification (P2) par le biais du filtre de télégrammes (TF),
- un circuit Watchdog (WD2) piloté par l'un des deux composants de vérification (P2) qui est conçu pour maintenir fermée la connexion (CNT) entre le réseau de données (N1) d'un niveau de sécurité plus faible et le réseau de données (N2) d'un niveau de sécurité plus élevé tant qu'il reçoit des signes de vie réguliers provenant du second composant de vérification (P2) et qui est conçu pour interrompre automatiquement la connexion (CNT) lorsqu'il ne reçoit pas de signes de vie pendant un intervalle de temps prédéfini,
moyennant quoi le second composant de vérification (P2) est conçu pour générer après réception d'un télégramme de vérification autorisé selon les règles de filtrage un signe de vie pour le circuit Watchdog (WD2) et pour empêcher, après réception d'un télégramme de vérification non autorisé selon les règles de filtrage, la génération de signes de vie pour le circuit Watchdog (WD2) pour au moins l'intervalle de temps prédéfini.

2. Dispositif selon la revendication 1, dans lequel le second composant de vérification (P2) reçoit un facteur d'intervalle de temps qui influence l'intervalle de temps selon lequel un signe de vie est généré pour le circuit Watchdog (WD2) et dans lequel les télégrammes de vérification contiennent un facteur de retardement qui est multiplié par une valeur de retardement de l'horloge, moyennant quoi les télégrammes autorisés selon les règles de filtrage contiennent le facteur de retardement 1 et les télégrammes non autorisés selon les règles de filtrage contiennent un facteur de retardement plus élevé.

3. Dispositif selon la revendication 1 ou 2, contenant un second circuit Watchdog (WD1) qui est piloté par le premier composant de vérification (P1) et qui est conçu pour maintenir fermée la connexion (CNT) entre le réseau de données (N2) d'un niveau de sécurité plus faible et le réseau de données (N1) d'un niveau de sécurité plus élevé tant qu'il reçoit des signes de vie réguliers provenant du premier composant de vérification (P1) et qui est conçu pour interrompre automatiquement la connexion (CNT) lorsqu'il ne reçoit pas de signes de vie pendant un intervalle de temps prédéfini, moyennant quoi le second composant de vérification (P2) est conçu pour générer après réception d'un télégramme de vérification autorisé selon les règles de filtrage un signe de vie pour le second composant de vérification (WD1) et pour empêcher, après réception d'un télégramme de vérification non autorisé selon les règles de filtrage, la génération de signes de vie pour le second circuit Watchdog (WD1) pendant au moins l'intervalle de temps prédéfini.

4. Dispositif selon la revendication 3 dans lequel chacun des deux composants de vérification (P2, P1) contient un facteur d'intervalle de temps qui influence l'intervalle de temps dans lequel le télégramme de vérification suivant est envoyé vers l'autre composant de vérification (P1, P2) et dans lequel les télégrammes de vérification contiennent un facteur de retardement qui est multiplié par la valeur de retardement de l'horloge et est enregistré en tant que nouveau facteur de retardement, moyennant quoi les télégrammes autorisés selon les règles de filtrage contiennent le facteur de retardement 1 et les télégrammes non autorisés selon les règles de filtrage contiennent un facteur de retardement plus élevé.

5. Dispositif selon la revendication 3, dans lequel le premier et le second circuits Watchdog (WD2, WD1) sont montés en série.

6. Dispositif selon l'une quelconque des revendications précédentes, comportant un pare-feu (STL-PU) avec un proxy TCP disposé entre le réseau de données (N2) d'un niveau de sécurité plus faible et le filtre de télégrammes (TF), moyennant quoi des télégrammes de vérification provenant des composants de vérification (P1, P2) sont guidés par le biais du pare-feu (STPL-PU) vers le filtre de télégrammes (TF) et moyennant quoi l'un ou les deux circuits Watchdog (WD2, WD1) sont conçus pour interrompre la connexion (CNT) entre le pare-feu (STL-PU) et le filtre de télégrammes (TF).

7. Dispositif selon l'une quelconque des revendications précédentes, dans lequel le filtre de télégrammes (TF) et les deux composants de vérification (P1, P2) sont conçus en tant que modules de programme qui sont exécutés sur un ordinateur et le premier et/ou le second circuit Watchdog (WD1, WD2) sont conçus sous forme de cartes à enficher qui sont enfichées dans l'ordinateur.

8. Procédé pour la vérification de l'intégrité d'un dispositif qui sert à la liaison d'un réseau de données (N2) d'un niveau de sécurité plus faible avec un réseau de données (N1) d'un niveau de sécurité plus élevé et qui contient un filtre de télégrammes (TF) pour le filtrage de télégrammes provenant du réseau de données (N2) d'un niveau de sécurité plus faible selon des règles de filtrage prédéfinies et un circuit Watchdog (WD2) qui est conçu pour maintenir fermée la connexion (CNT) entre le réseau de données (N2) d'un niveau de sécurité plus faible et le réseau de données (N1) d'un niveau de sécurité plus élevé tant qu'il reçoit régulièrement des signes de vie et qui est conçu pour interrompre automatiquement la connexion (CTN) lorsqu'il ne reçoit pas de signes de vie pendant un intervalle de temps prédéfini, les étapes suivantes étant effectuées lors du procédé :
- des télégrammes de vérification sont générés et envoyés par le biais du filtre de télégrammes (TF) vers un composant de vérification (P2),
- après réception d'un télégramme de vérification autorisé selon les règles de filtrage, le composant de vérification (P2) génère un signe de vie pour un circuit Watchdog (WD2) et
- après réception d'un télégramme de vérification non autorisé selon les règles de filtrage, le composant de vérification empêche une génération de signes de vie pour le circuit Watchdog (WD2) pendant au moins un intervalle de temps prédéfini.
